# EUROPEAN PATENT SPECIFICATION

(11) **EP 4 220 860 B1**
(45) Date of publication and mention of the grant of the patent: **28.10.2026**
(21) Application number: 23152821.7
(22) Date of filing: 29.12.2016
(51) Int. Cl.: H01Q 3/24, H01P 1/12, H01Q 1/24, H01Q 25/00

(54) **ANTENNA AND NETWORK DEVICE**
ANTENNE UND NETZWERKVORRICHTUNG
ANTENNE ET DISPOSITIF DE RÉSEAU

(43) Date of publication of application: 02.08.2023
(60) Divisional application: 26206815.8
(62) Document number(s) of the earlier application(s) in accordance with Art. 76 EPC: 16925510.6 / 3 553 885
(73) Proprietor: Huawei Technologies Co., Ltd., Longgang District, Shenzhen, Guangdong 518129 (CN)
(72) Inventor: WANG, Naibiao, SHENZHEN, 518129 (CN); XIAO, Weihong, SHENZHEN, 518129 (CN)
(74) Representative: Körber, Martin Hans

(56) References cited:
- WO-A1-2012/159345
- CH-A- 331 382
- GB-A- 966 549
- US-A- 2 609 503
- US-A1- 2004 157 645
- US-A1- 2009 277 762

## Description

### TECHNICAL FIELD

This application relates to the field of antenna technologies, and in particular, to an array antenna and a network device.

### BACKGROUND

With development of mobile communications technologies, users impose increasingly high requirements for high-speed data transmission, and user requirements are also increasingly diversified in type. Modern mobile communication needs to meet high-speed wireless access requirements in diversified scenarios. Upgrade of mobile communications devices gradually speeds up. However, it becomes more difficult to obtain an available station resource in an urban area. Therefore, a base station antenna capable of satisfying requirements a plurality of deployed sites and working in diversified scenarios becomes one of development directions of the base station antenna in the future. The base station antenna capable of working in diversified scenarios also provides a more effective approach for implementing site sharing for mobile communications operators. This meets a smooth upgrade requirement of an existing device and a green energy saving requirement.

For the base station antenna capable of working in diversified scenarios, the antenna is required to provide, depending on a different application scenario, a different operating state that meets a requirement of the application scenario, and the base station antenna is also required to be miniaturized. Therefore, to meet both a requirement of an appropriate antenna size and indicator requirements in a plurality of application scenarios, an array design innovation is required for the base station antenna in diversified application scenarios.

In the prior art, a distance between a reflective plate side of an antenna and a radiating element is adjusted by moving a position of the reflective plate side, to change a surrounding environment of the radiating element. In this way, current distribution on the radiating element, a bottom surface of the reflective plate, and the reflective plate side is changed, so as to change a beam width of a radiation directivity pattern of the antenna. However, adjusting the reflective plate side slightly affects the current distribution, and therefore, the beam width changes in a relatively small range.

US 2004/157645 A1 discloses operation of an array antenna. The array antenna has configurable beamwidth and is operable in any of multiple operating modes associated with respective beamwidths.

US 2009/277762 A1 discloses a micromachine switch for switching an electrical connection between signal electrodes in accordance with control signals. The micromachine switch comprises a substrate; a rotating body provided on the substrate, which is rotatable on the substrate; a movable electrode provided on the rotating body and signal electrodes, which are electrically dis/connected to the movable electrode according to movements of the rotating body.

GB 966 549 A discloses operation of an array antenna. The array antenna is operable in multiple operating modes associated with respective beam orientations.

US 2 609 503 A relates to high frequency antennae as particularly used with television or other high frequency systems employing selective directive radiation.

CH 331 382 A discloses a high-frequency switch for a tape conductor.

WO 2012/159345 A1 discloses an antenna system comprising an antenna, an antenna feeder network, at least two signal sources and a switch network.

### SUMMARY

This application provides an array antenna, to flexibly change a beam width of a radiation directivity pattern of an antenna.

The present invention is defined by an antenna according to independent claim 1. Advantageous features are defined in the dependent claims.

According to the foregoing content, the array antenna in this application includes: the n radiating elements, wherein the n radiating elements are sequentially arranged in a horizontal direction or in a vertical direction; the power splitter or the phase shifter, including the n output ends and the m input ends, where the n output ends are respectively connected to the n radiating elements, and the any one of the m input ends is connected to the at least one of the n output ends; and the switching switch, including the m first ports, the K second ports, and the switch element, where the m first ports are respectively connected to the m input ends, the K second ports are configured to couple the input signal, and the switch element is configured to switch the connection relationship between the m first ports and the K second ports, so as to selectively output the input signal to the at least one first port. The switch element comprises p fixed strips and q movable strips, wherein ends of m fixed strips in the p fixed strips act as the m first ports, wherein the switch element further includes at least one pull rod connected to at least one of the q movable strips, wherein the antenna is configured to electrically control the at least one pull rod so that the q movable strips are electrically controlled and selectively connected to the p fixed strips , wherein m < p and wherein ends of K fixed strips in the p fixed strips act as the K second ports, and K < p. Based on the foregoing structure, the switching switch is configured to control transmission or interruption of a signal that is output to the n radiating elements, and set the quantity of radiating elements in an operating state, so as to flexibly change the beam width of the radiation directivity pattern of the antenna. In addition, because the switching switch for setting the radiating element to an operating or non-operating state has a simple structure, and causes a relatively small introduced insertion loss, gains of the antenna are relatively high.

### BRIEF DESCRIPTION OF DRAWINGS

FIG 1a is a schematic diagram of an array antenna according to Embodiment 1 of this application;
FIG 1b is a specific schematic structural diagram of an array antenna according to Embodiment 1 of this application;
FIG 2a is a schematic diagram of using a switching switch to control one radiating element to operate in Embodiment 2 of this application;
FIG 2b is a schematic diagram of using a switching switch to control two radiating elements to operate in Embodiment 2 of this application;
FIG 2c is a specific schematic structural diagram of an array antenna according to Embodiment 2 of this application;
FIG 2d is a schematic diagram of fixed strips and movable strips in Embodiment 2 of this application;
FIG 2e is a schematic diagram of using a switching switch to control one radiating
   the third movable strip is connected to the first fixed strip and the fifth fixed strip; or
   the second movable strip is connected to the first fixed strip and the second fixed strip, and the fifth movable strip is connected to the third fixed strip and the fifth fixed strip; or
   the first movable strip is connected to the first fixed strip and the second fixed strip, and the fourth movable strip is connected to the third fixed strip, the fourth fixed strip, and the fifth fixed strip.

Optionally, the n output ends include a first output end to a sixth output end, and the m input ends include the first input end to the fourth input end, where
the first input end is connected to the first output end;
the second input end is connected to the second output end and the third output end;
the third input end is connected to the second output end and the third output end; and
the fourth input end is connected to the fourth output end, the fifth output end, and the sixth output end.

Optionally, the switch element further includes a pull rod, and the pull rod is connected to at least one of the q movable strips.

In this way, disposing the pull rod provides a specific manner of changing the position of the movable strip, and facilitates electrical or manual control of the movable strip.

Optionally, the q movable strips are selectively connected to the p fixed strips in an electrical manner or capacitive coupling manner.

Optionally, both the p fixed strips and the q movable strips are metal strips or copper foil strips of a printed circuit board PCB.

Optionally, the n radiating elements are sequentially arranged in a horizontal direction or in a vertical direction.

This application further provides a network device, including the array antenna according to any one of the foregoing implementations.

According to the foregoing content, the array antenna in this application includes: the n radiating elements; the power splitter or the phase shifter, including the n output ends and the m input ends, where the n output ends are respectively connected to the n radiating elements, and the any one of the m input ends is connected to the at least one of the n output ends; and the switching switch, including the m first ports, the K second ports, and the switch element, where the m first ports are respectively connected to the m input ends, the K second ports are configured to couple the input signal, and the switch element is configured to switch the connection relationship between the m first ports and the K second ports, so as to selectively output the input signal to the at least one first port. Based on the foregoing structure, the switching switch is configured to control transmission or interruption of a signal that is output to the n radiating elements, and set the quantity of radiating elements in an operating state, so as to flexibly change the beam width of the radiation directivity pattern of the antenna. In addition, because the switching switch for setting the radiating element to an operating or non-operating state has a simple structure, and causes a relatively small introduced insertion loss, gains of the antenna are relatively high.

### BRIEF DESCRIPTION OF DRAWINGS

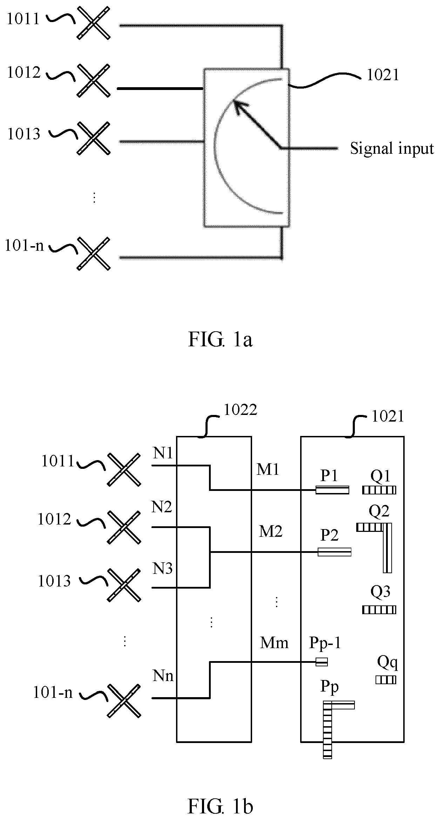

FIG 1a is a schematic diagram of an array antenna according to Embodiment 1 of this application;
FIG 1b is a specific schematic structural diagram of an array antenna according to Embodiment 1 of this application;

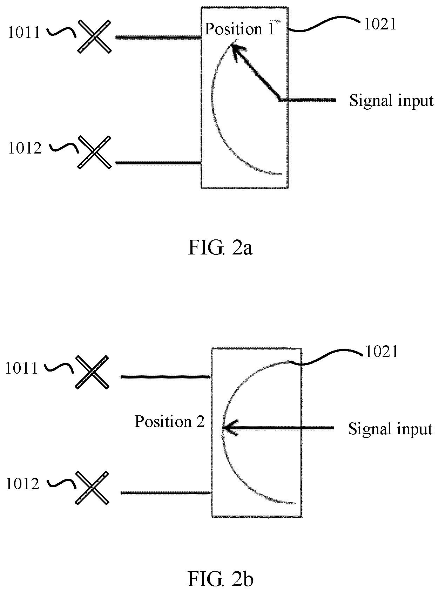

FIG 2a is a schematic diagram of using a switching switch to control one radiating element to operate in Embodiment 2 of this application;
FIG 2b is a schematic diagram of using a switching switch to control two radiating elements to operate in Embodiment 2 of this application;

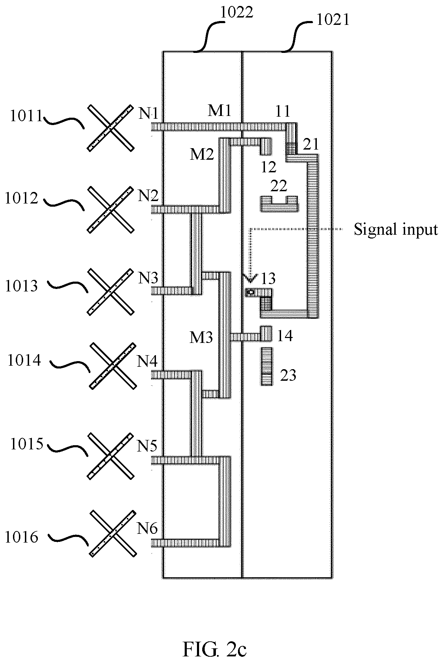

FIG 2c is a specific schematic structural diagram of an array antenna according to Embodiment 2 of this application;

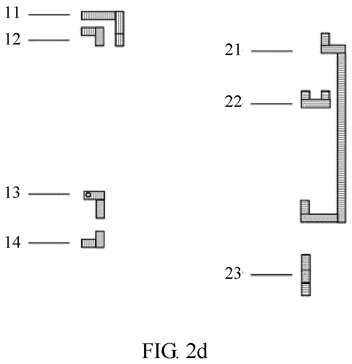

FIG 2d is a schematic diagram of fixed strips and movable strips in Embodiment 2 of this application;

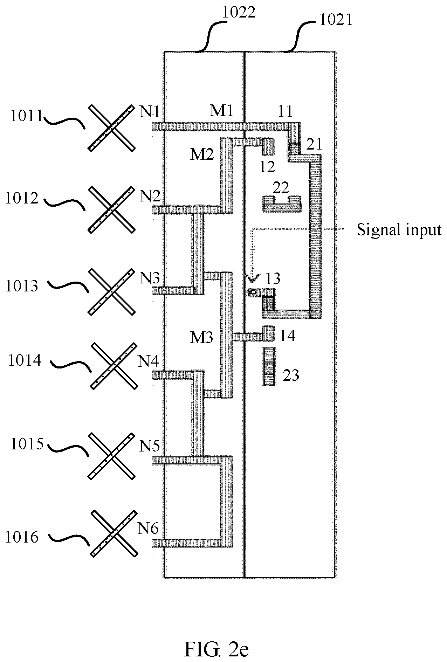

FIG 2e is a schematic diagram of using a switching switch to control one radiating element to operate in Embodiment 2 of this application;

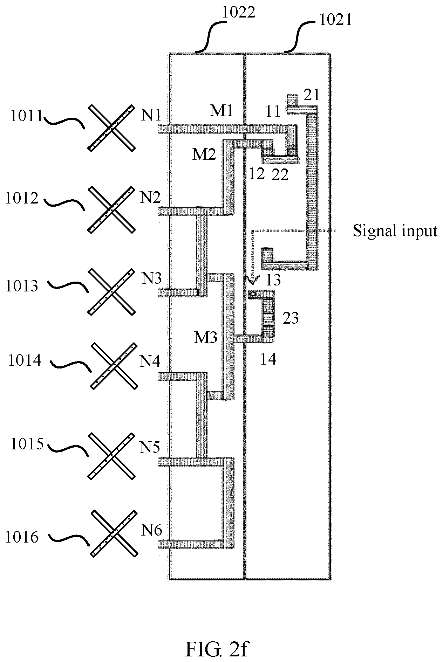

FIG 2f is a schematic diagram of using a switching switch to control six radiating elements to operate in Embodiment 2 of this application;

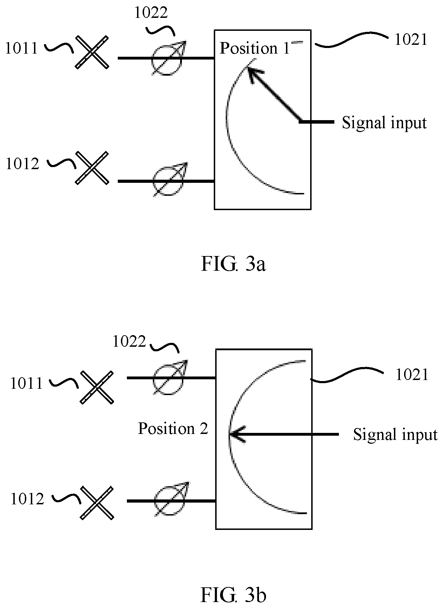

FIG 3a is a schematic diagram of using a switching switch to control one radiating element to operate in Embodiment 3 of this application;
FIG 3b is a schematic diagram of using a switching switch to control two radiating elements to operate in Embodiment 3 of this application;

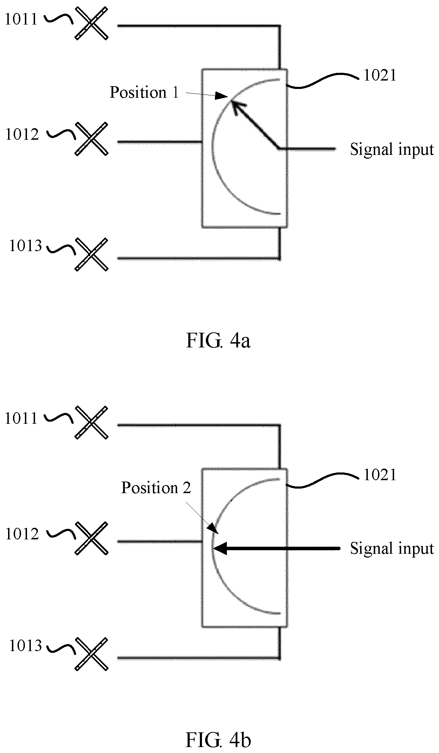

FIG 4a is a schematic diagram of using a switching switch to control one radiating element to operate in Embodiment 4 of this application;
FIG 4b is a schematic diagram of using a switching switch to control two radiating elements to operate in Embodiment 4 of this application;

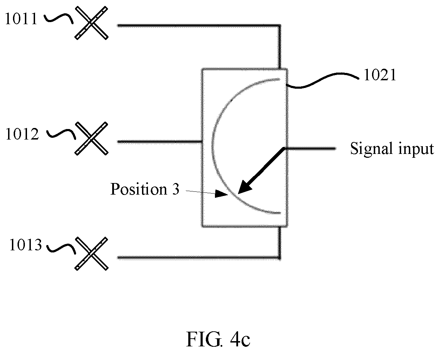

FIG 4c is a schematic diagram of using a switching switch to control three radiating elements to operate in Embodiment 4 of this application;

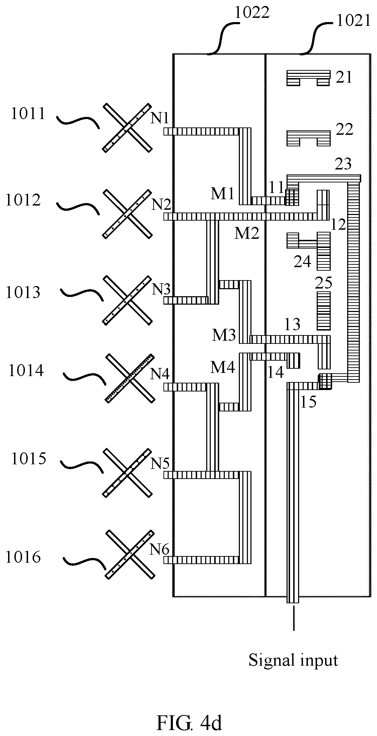

FIG 4d is a specific schematic structural diagram of an array antenna according to Embodiment 4 of this application;

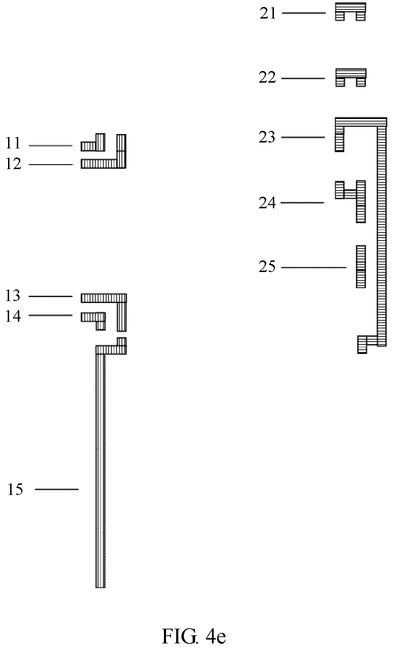

FIG 4e is a schematic diagram of fixed strips and movable strips in Embodiment 4 of this application;

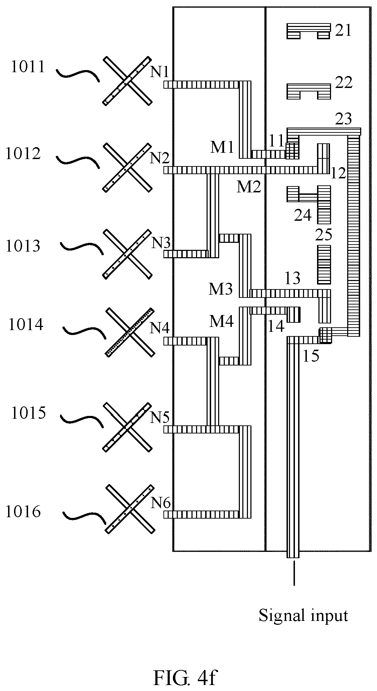

FIG 4f is a schematic diagram of using a switching switch to control one radiating element to operate in Embodiment 4 of this application;

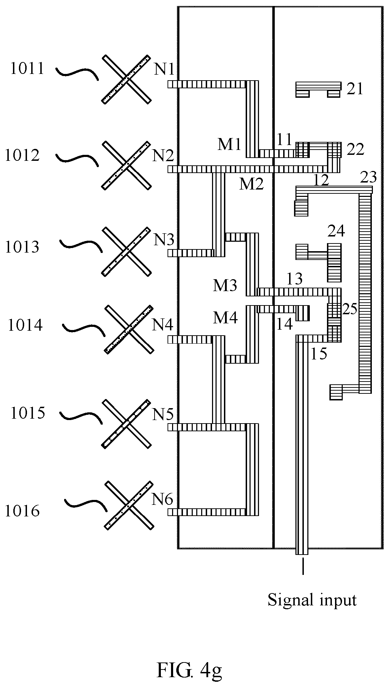

FIG 4g is a schematic diagram of using a switching switch to control three radiating elements to operate in Embodiment 4 of this application;

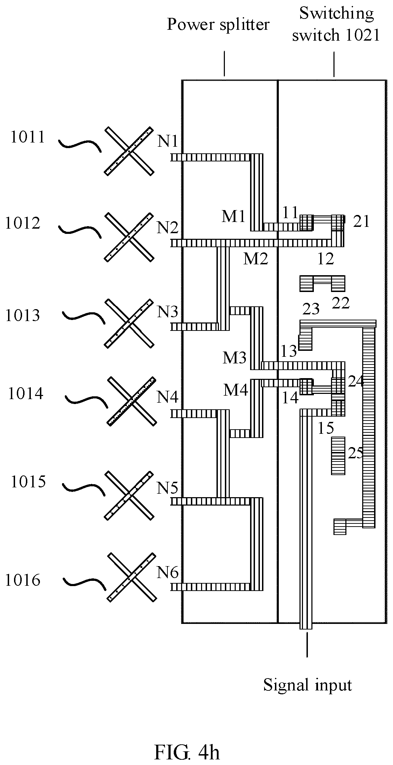

FIG 4h is a schematic diagram of using a switching switch to control six radiating elements to operate in Embodiment 4 of this application;

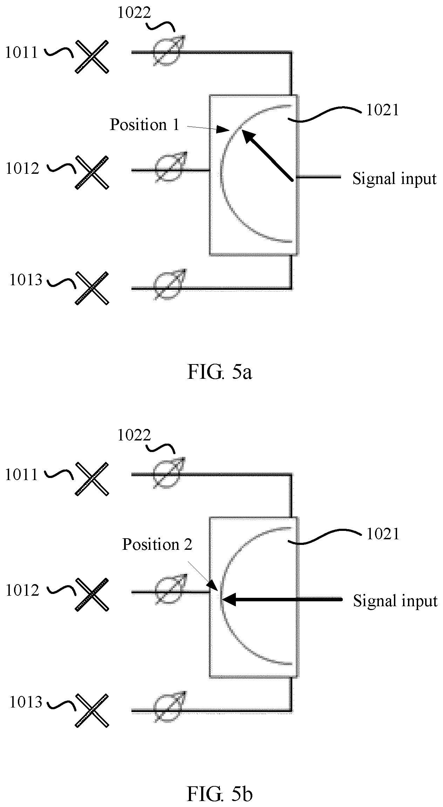

FIG 5a is a schematic diagram of using a switching switch to control one radiating element to operate in Embodiment 5 of this application;
FIG 5b is a schematic diagram of using a switching switch to control two radiating elements to operate in Embodiment 5 of this application; and

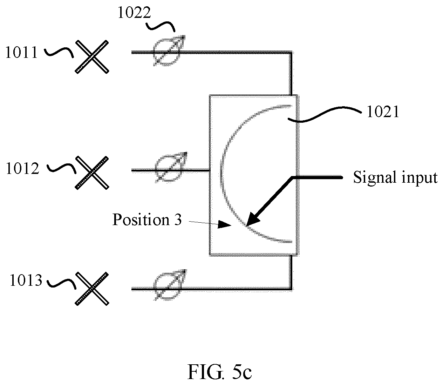

FIG 5c is a schematic diagram of using a switching switch to control three radiating elements to operate in Embodiment 5 of this application.

### DESCRIPTION OF EMBODIMENTS

The following describes the embodiments of this application in detail with reference to the accompanying drawings of this specification.

This application provides an array antenna that can flexibly change a beam width of a radiation directivity pattern of an antenna.

### Embodiment 1

FIG 1a is a schematic diagram of an array antenna according to Embodiment 1 of this application. As shown in FIG 1a, the array antenna includes:
n radiating elements, for example, a radiating element 1011, a radiating element 1012, a radiating element 1013, ..., and a radiating element 101n; and
a feeding network, where the feeding network includes a switching switch 1021, and the switching switch 1021 is connected to the n radiating elements.

Based on the foregoing structure, the switching switch 1021 may control transmission or interruption of a signal that is output by the feeding network to the n radiating elements, and set a quantity of radiating elements in an operating state, that is, set different operating modes, so as to flexibly change a beam width of a radiation directivity pattern of an antenna. The n radiating elements may be single-polarized radiating elements, or may be dual-polarized radiating elements, and a balun corresponding to each polarization direction of a radiating element has signal excitation provided by a corresponding feeding network.

It should be noted that, n is a positive integer, and a specific value of n may be set by persons skilled in the art according to an actual situation. To flexibly change the beam width of the radiation directivity pattern of the antenna, the value of n may be greater than or equal to 2.

FIG 1b is a specific schematic structural diagram of an array antenna according to Embodiment 1 of this application. As shown in FIG 1b, the array antenna includes:
n radiating elements, for example, a radiating element 1011, a radiating element 1012, a radiating element 1013, ..., and a radiating element 101n; and
a feeding network, where the feeding network includes a switching switch 1021, and a power splitter or a phase shifter 1022; the power splitter or the phase shifter 1022 includes n output ends (N1, N2, N3, ..., and Nn) and m input ends (M1, M2, ..., and Mm); any one of the m input ends is connected to at least one of the n output ends; and the n radiating elements are respectively connected to the n output ends. It should be noted that, in this application, a connection between an input end and an output end means that a signal flowing into the input end may arrive at the output end. To be specific, the signal flowing into the input end may arrive at the output end after being processed in the power splitter or the phase shifter, or may directly arrive at the output end without being processed. This is not specifically limited.

Further, the switching switch 1021 includes m first ports, K second ports, and a switch element, where the m first ports are respectively connected to the m input ends; the K second ports are configured to couple an input signal; and the switch element is configured to switch a connection relationship between the m first ports and the K second ports, so as to selectively output the input signal to at least one first port.

The switch element includes p fixed strips (P1, P2, ..., Pp-1, and Pp) and q movable strips (Q1, Q2, Q3, ..., and Qq), where ends of m fixed strips in the p fixed strips act as the m first ports and are respectively connected to the m input ends, and the q movable strips are selectively connected to the p fixed strips. The p fixed strips include K signal input lines configured to input signals, and ends of K fixed strips act as the K second ports. A specific quantity of signal input lines may be set by persons skilled in the art according to experience and an actual situation, for example, one signal input line or a plurality of signal input lines may be set. In this application, one or more fixed strips may be set as signal input lines.

It should be noted that, that the q movable strips are selectively connected to the p fixed strips specifically means that the q movable strips may be connected to different fixed strips based on a to-be-connected radiating element by changing a position of at least one movable strip.

Based on the foregoing structure, the q movable strips in the switch element may be selectively connected to the p fixed strips, to control transmission or interruption of the signal that is output by the feeding network to the n radiating elements, and set the quantity of radiating elements in an operating state, thereby flexibly changing the beam width of the radiation directivity pattern of the antenna. To be specific, if the n radiating elements are sequentially arranged in a horizontal direction, the foregoing structure may be used to flexibly change a horizontal beam width of the antenna; if the n radiating elements are sequentially arranged in a vertical direction, the foregoing structure may be used to flexibly change a vertical beam width of the antenna; and if the n radiating elements are sequentially arranged in another direction, the foregoing structure may be used to flexibly change a beam width of the antenna in the another direction.

Further, if the feeding network includes a phase shifter, a beam direction of the antenna may be changed by changing a phase of the phase shifter. The phase shifter may change the phase by changing a dielectric constant of a signal channel, or may change the phase by changing a physical length of a signal channel, or may change the phase in another implementation.

In this application, the switch element may further include a pull rod, and the pull rod may be connected to at least one of the q movable strips, so that a position of a movable strip connected to the pull rod can be changed by using the pull rod, to selectively connect the movable strip to a fixed strip. Specifically, the pull rod may be electrically controlled, for example, by using a motor, or may be manually controlled.

It should be noted that, the aforementioned connection relationship between the pull rod and the movable strip is only an example for description. In this application, each movable strip may be connected to one pull rod, or another connection manner may be used, provided that the q movable strips can be controlled to selectively connect to the p fixed strips. A specific connection manner is not specifically limited.

In this application, the q movable strips and the p fixed strips may be metal strips with a relatively small thickness, or copper foil strips of a printed circuit board (Printed Circuit Board, PCB). This is not specifically limited. The q movable strips may be selectively connected to the p fixed strips in a plurality of manners, for example, in an electrical manner or capacitive coupling manner.

In this embodiment of the present invention, at least two operating modes may be set by using the switching switch. In the following, only two operating modes (Embodiment 2 and Embodiment 3) and three operating modes (Embodiment 4 and Embodiment 5) set by using the switching switch are used as examples for description.

### Embodiment 2

An array antenna includes two radiating elements (a radiating element 1011 and a radiating element 1012) and a feeding network. The feeding network includes a switching switch 1021, and two operating modes set by using the switching switch are shown in FIG 2a and FIG 2b.

FIG 2a is a schematic diagram of using a switching switch to control one radiating element to operate in Embodiment 2. As shown in FIG 2a, when the switching switch is switched to a position 1, a signal that is output through the feeding network to the radiating element 1011 is transmitted, and a signal that is output to the radiating element 1012 is interrupted. In this case, the radiating element 1011 is in an operating state, and the radiating element 1012 is not in an operating state.

FIG 2b is a schematic diagram of using a switching switch to control two radiating elements to operate in Embodiment 2. As shown in FIG 2b, when the switching switch is switched to a position 2, signals that are output through the feeding network to the radiating element 1011 and the radiating element 1012 are transmitted. In this case, both the radiating element 1011 and the radiating element 1012 are in an operating state.

It can be learned from the foregoing content that, a quantity of radiating elements in an operating state can be set by changing the switching switch to control transmission or interruption of a signal that is output by the feeding network to the radiating elements, thereby changing a beam width of an antenna.

FIG 2c is a specific schematic structural diagram of an array antenna according to Embodiment 2 of this application. As shown in FIG 2c, the array antenna includes:
six radiating elements, for example, a radiating element 1011, a radiating element 1012, a radiating element 1013, a radiating element 1014, a radiating element 1015, and a radiating element 1016; and
a feeding network, where the feeding network includes a switching switch 1021 and a power splitter 1022; the power splitter 1022 includes six output ends (N1, N2, N3, N4, N5, and N6) and three input ends (M1, M2, and M3); the six radiating elements are respectively connected to the six output ends; and M1 is connected to N1, M2 is connected to N2, N3, N4, N5, and N6, and M3 is connected to N2, N3, N4, N5, and N6.

Further, the switching switch 1021 includes four fixed strips (11, 12, 13, and 14, as shown in FIG 2d) and q movable strips (21, 22, and 23, as shown in FIG 2d). Three of the four fixed strips are respectively connected to the three input ends, that is, 11 is connected to M1, 12 is connected to M2, and 14 is connected to M3; and the fixed strip 13 is a signal input line.

Based on the foregoing structure, a fixed strip connected to a movable strip may be changed by changing a position of the movable strip, so as to control transmission or interruption of a signal that is output by the feeding network to the six radiating elements, and set the quantity of radiating elements in an operating state, that is, set different operating modes as shown in FIG 2e and FIG 2f, thereby flexibly changing a beam width of a radiation directivity pattern of an antenna.

FIG 2e is a schematic diagram of using a switching switch to control one radiating element to operate in Embodiment 2. As shown in FIG 2e, the movable strip 21 is connected to the fixed strip 11 and the fixed strip 13 in a direct electrical connection or capacitive coupling manner to implement signal connection. In this case, only the radiating element 1011 is in a signal-transmittable state with the feeding network, and therefore the radiating element 1011 is in an operating state. At this time, because the quantity of radiating elements in an operating state is smallest, the beam width of the directivity pattern of the antenna is widest, and the antenna is suitable for a high-rise building coverage scenario.

FIG 2f is a schematic diagram of using a switching switch to control six radiating elements to operate in Embodiment 2. As shown in FIG 2f, the movable strip 22 is connected to the fixed strip 11 and the fixed strip 12 in a direct electrical connection or capacitive coupling manner to implement signal connection, and the movable strip 23 is connected to the fixed strip 13 and the fixed strip 14 in a direct electrical connection or capacitive coupling manner to implement signal connection. In this case, the radiating element 1011, the radiating element 1012, the radiating element 1013, the radiating element 1014, the radiating element 1015, and the radiating element 1016 are all in a signal-transmittable state with the feeding network, and therefore the radiating element 1011, the radiating element 1012, the radiating element 1013, the radiating element 1014, the radiating element 1015, and the radiating element 1016 are all in an operating state. At this time, because the quantity of radiating elements in an operating state is largest, the beam width of the directivity pattern of the antenna is narrowest, and the antenna is suitable for a street macro-coverage scenario.

### Embodiment 3

An array antenna includes two radiating elements (a radiating element 1011 and a radiating element 1012) and a feeding network. The feeding network includes a switching switch 1021 and a phase shifter 1022, and two operating modes set by using the switching switch are shown in FIG 3a and FIG 3b. A direction of an antenna beam may be changed by changing a phase of the phase shifter. The phase shifter may change the phase by changing a dielectric constant of a signal channel, or may change the phase by changing a physical length of a signal channel, or may change the phase in another implementation.

FIG 3a is a schematic diagram of using a switching switch to control one radiating element to operate in Embodiment 3. As shown in FIG 3a, when the switching switch is switched to a position 1, a signal that is output through the feeding network to the radiating element 1011 is transmitted, and a signal that is output to the radiating element 1012 is interrupted. In this case, the radiating element 1011 is in an operating state, and the radiating element 1012 is not in an operating state.

FIG 3b is a schematic diagram of using a switching switch to control two radiating elements to operate in Embodiment 3. As shown in FIG 3b, when the switching switch is switched to a position 2, signals that are output through the feeding network to the radiating element 1011 and the radiating element 1012 are transmitted. In this case, both the radiating element 1011 and the radiating element 1012 are in an operating state.

It can be learned from the foregoing content that, a quantity of radiating elements in an operating state can be set by changing the switching switch to control transmission or interruption of a signal that is output by the feeding network to the radiating elements, thereby changing a beam width of an antenna.

For a specific schematic structural diagram of the array antenna in Embodiment 3, refer to FIG 2c in the foregoing Embodiment 2, provided that "power splitter" is changed to "phase shifter". Details are not described herein.

### Embodiment 4

An array antenna includes three radiating elements (a radiating element 1011, a radiating element 1012, and a radiating element 1013) and a feeding network. The feeding network includes a switching switch 1021, and three operating modes set by using the switching switch are shown in FIG 4a to FIG 4c.

FIG 4a is a schematic diagram of using a switching switch to control one radiating element to operate in Embodiment 4. As shown in FIG 4a, when the switching switch is switched to a position 1, a signal that is output through the feeding network to the radiating element 1011 is transmitted, and signals that are output to the radiating element 1012 and the radiating element 1013 are interrupted. In this case, the radiating element 1011 is in an operating state, and the radiating element 1012 and the radiating element 1013 are not in an operating state.

FIG 4b is a schematic diagram of using a switching switch to control two radiating elements to operate in Embodiment 4. As shown in FIG 4b, when the switching switch is switched to a position 2, signals that are output through the feeding network to the radiating element 1011 and the radiating element 1012 are transmitted, and a signal that is output to the radiating element 1013 is interrupted. In this case, the radiating element 1011 and the radiating element 1012 are in an operating state, and the radiating element 1013 is not in an operating state.

FIG 4c is a schematic diagram of using a switching switch to control three radiating elements to operate in Embodiment 4. As shown in FIG 4c, when the switching switch is switched to a position 3, signals that are output through the feeding network to the radiating element 1011, the radiating element 1012, and the radiating element 1013 are all transmitted. In this case, the radiating element 1011, the radiating element 1012, and the radiating element 1013 are all in an operating state.

It can be learned from the foregoing content that, a quantity of radiating elements in an operating state can be set by changing the switching switch to control transmission or interruption of a signal that is output by the feeding network to the radiating elements, thereby changing a beam width of an antenna.

FIG 4d is a specific schematic structural diagram of an array antenna according to Embodiment 4 of this application. As shown in FIG 4d, the array antenna includes:
six radiating elements, for example, a radiating element 1011, a radiating element 1012, a radiating element 1013, a radiating element 1014, a radiating element 1015, and a radiating element 1016; and
a feeding network, where the feeding network includes a switching switch 1021 and a power splitter 1022; the power splitter 1022 includes six output ends (N1, N2, N3, N4, N5, and N6) and four input ends (M1, M2, M3, and M4); the six radiating elements are respectively connected to the six output ends; and M1 is connected to N1, M2 is connected to N2 and N3, M3 is connected to N2 and N3, and M4 is connected to N4, N5, and N6.

Further, the switching switch 1021 includes five fixed strips (11, 12, 13, 14, and 15, as shown in FIG 4e) and q movable strips (21, 22, 23, 24, and 25, as shown in FIG 4e). Four of the five fixed strips are respectively connected to the four input ends, that is, 11 is connected to M1, 12 is connected to M2, 13 is connected to M3, and 14 is connected to M4.

Based on the foregoing structure, a fixed strip connected to a movable strip may be changed by changing a position of the movable strip, so as to control transmission or interruption of a signal that is output by the feeding network to the six radiating elements, and set the quantity of radiating elements in an operating state, thereby flexibly changing a beam width of a radiation directivity pattern of the antenna.

FIG 4f to FIG 4h are schematic diagrams of controlling radiating elements to be in different operating states by using a switching switch.

FIG 4f is a schematic diagram of using a switching switch to control one radiating element to operate in Embodiment 4. As shown in FIG 4f, the movable strip 23 is connected to the fixed strip 11 and the fixed strip 15 in a direct electrical connection or capacitive coupling manner to implement signal connection. In this case, only the radiating element 1011 is in a signal-transmittable state with the feeding network, and therefore the radiating element 1011 is in an operating state. At this time, because the quantity of radiating elements in an operating state is smallest, the beam width of the directivity pattern of the antenna is widest, and the antenna is suitable for a high-rise building coverage scenario.

FIG 4g is a schematic diagram of using a switching switch to control three radiating elements to operate in Embodiment 4. As shown in FIG 4g, the movable strip 22 is connected to the fixed strip 11 and the fixed strip 12 in a direct electrical connection or capacitive coupling manner to implement signal connection, and the movable strip 25 is connected to the fixed strip 13 and the fixed strip 15 in a direct electrical connection or capacitive coupling manner to implement signal connection. In this case, only the radiating element 1011, the radiating element 1012, and the radiating element 1013 are in a signal-transmittable state with the feeding network, and therefore the radiating element 1011, the radiating element 1012, and the radiating element 1013 are in an operating state. At this time, because the quantity of radiating elements in an operating state is medium, the beam width of the directivity pattern of the antenna is medium, and the antenna is suitable for a mid- and low-rise building coverage scenario.

FIG 4h is a schematic diagram of using a switching switch to control six radiating elements to operate in Embodiment 4. As shown in FIG 4h, the movable strip 21 is connected to the fixed strip 11 and the fixed strip 12 in a direct electrical connection or capacitive coupling manner to implement signal connection, and the movable strip 24 is connected to the fixed strip 13, the fixed strip 14, and the fixed strip 15 in a direct electrical connection or capacitive coupling manner to implement signal connection. In this case, the radiating element 1011, the radiating element 1012, the radiating element 1013, the radiating element 1014, the radiating element 1015, and the radiating element 1016 are all in a signal-transmittable state with the feeding network, and therefore the radiating element 1011, the radiating element 1012, the radiating element 1013, the radiating element 1014, the radiating element 1015, and the radiating element 1016 are all in an operating state. At this time, because the quantity of radiating elements in an operating state is largest, the beam width of the directivity pattern of the antenna is narrowest, and the antenna is suitable for a street macro-coverage scenario.

### Embodiment 5

An array antenna includes three radiating elements (a radiating element 1011, a radiating element 1012, and a radiating element 1013) and a feeding network. The feeding network includes a switching switch 1021 and a phase shifter 1022, and two operating modes set by using the switching switch are shown in FIG 5a and FIG 5b. A direction of an antenna beam may be changed by changing a phase of the phase shifter. The phase shifter may change the phase by changing a dielectric constant of a signal channel, or may change the phase by changing a physical length of a signal channel, or may change the phase in another implementation.

FIG 5a is a schematic diagram of using a switching switch to control one radiating element to operate in Embodiment 5. As shown in FIG 5a, when the switching switch is switched to a position 1, a signal that is output through the feeding network to the radiating element 1011 is transmitted, and signals that are output to the radiating element 1012 and the radiating element 1013 are interrupted. In this case, the radiating element 1011 is in an operating state, and the radiating element 1012 and the radiating element 1013 are not in an operating state.

FIG 5b is a schematic diagram of using a switching switch to control two radiating elements to operate in Embodiment 5. As shown in FIG 5b, when the switching switch is switched to a position 2, signals that are output through the feeding network to the radiating element 1011 and the radiating element 1012 are transmitted, and a signal that is output to the radiating element 1013 is interrupted. In this case, the radiating element 1011 and the radiating element 1012 are in an operating state, and the radiating element 1013 is not in an operating state.

FIG 5c is a schematic diagram of using a switching switch to control three radiating elements to operate in Embodiment 5. As shown in FIG 5c, when the switching switch is switched to a position 3, signals that are output through the feeding network to the radiating element 1011, the radiating element 1012, and the radiating element 1013 are all transmitted. In this case, the radiating element 1011, the radiating element 1012, and the radiating element 1013 are all in an operating state.

It can be learned from the foregoing content that, a quantity of radiating elements in an operating state can be set by changing the switching switch to control transmission or interruption of a signal that is output by the feeding network to the radiating elements, thereby changing a beam width of an antenna.

For a specific schematic structural diagram of the array antenna in Embodiment 5, refer to FIG. 4d in the foregoing Embodiment 4, provided that "power splitter" is changed to "phase shifter". Details are not described herein.

This application further provides a network device, including the array antenna described in the foregoing embodiments.

Further embodiments of the present invention are provided in the following. It should be noted that the numbering used in the following section does not necessarily need to comply with the numbering used in the previous sections.

Although some embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to this application without departing from the scope of this application. This application is intended to cover these modifications and variations of this application provided that they fall within the scope of protection defined by the following claims.

## Claims

1. An antenna, comprising:
n radiating elements (1011, 1012, 1013, ..., 101n), wherein the n radiating elements are sequentially arranged in a horizontal direction or in a vertical direction;
a power splitter or a phase shifter (1022), comprising n output ends (N1, N2, N3, ..., and Nn) and m input ends (M1, M2, ..., and Mm), wherein the n output ends (N1, N2, N3, ..., and Nn) are respectively connected to the n radiating elements (1011, 1012, 1013, ..., 101n),, and any one of the m input ends (M1, M2, ..., and Mm) is connected to at least one of the n output ends (N1, N2, N3, ..., and Nn); and
a switching switch (1021), comprising m first ports, K second ports, and a switch element, wherein the m first ports are respectively connected to the m input ends (M1, M2, ..., and Mm);
the K second ports are configured to couple an input signal; and
the switch element is configured to switch a connection relationship between the m first ports and the K second ports, so as to selectively output the input signal to at least one first port,
wherein the switch element comprises p fixed strips (P1, P2, ..., and Pp) and q movable strips (Q1, Q2, ..., and Qq);
wherein ends of m fixed strips in the p fixed strips act as the m first ports,
wherein the switch element further includes at least one pull rod connected to at least one of the q movable strips;
wherein the antenna is configured to electrically control the at least one pull rod so that the q movable strips (Q1, Q2, ..., and Qq) are electrically controlled and selectively connected to the p fixed strips (P1, P2, ..., and Pp),
wherein m ≤ p and wherein ends of K fixed strips in the p fixed strips act as the K second ports, and K ≤ p,
wherein p, n and m are integers greater than 1, and q and K are integers greater than or equal to 1.

2. The antenna according to claim 1, wherein the p fixed strips (P1, P2, ..., and Pn) comprise a first fixed strip to a fourth fixed strip (11, 12, 13, 14), wherein the first fixed strip, the second fixed strip, and the fourth fixed strip are respectively connected to first input end, second input end, and third input end, and an end of the third fixed strip acts as the second port; and the q movable strips comprise a first movable strip to a third movable strip (21, 22, 23); and
that the q movable strips are selectively connected to the p fixed strips is specifically:
the first movable strip (21) is connected to the first fixed strip (11) and the third fixed strip (13) in a first operating mode set by the switching switch; and
the second movable strip (22) is connected to the first fixed strip (11) and the second fixed strip (12), and the third movable strip (23) is connected to the third fixed strip (13) and the fourth fixed strip (14) in a second operating mode set by the switching switch.

3. The antenna according to claim 2, wherein the n output ends (N1, N2, ..., Nn) comprise a first output end to a sixth output end, and the m input ends comprise the first input end to the third input end, wherein
the first input end is connected to the first output end;
the second input end is connected to the second output end, the third output end, the fourth output end, the fifth output end, and the sixth output end; and
the third input end is connected to the second output end, the third output end, the fourth output end, the fifth output end, and the sixth output end.

4. The antenna according to claim 1, wherein the p fixed strips comprise a first fixed strip to a fifth fixed strip (11, 12, 13, 14, 15), wherein the first fixed strip to the fourth fixed strip are respectively connected to first input end to fourth input end, and an end of the fifth fixed strip acts as the second port; and the q movable strips comprise a first movable strip to a fifth movable strip (21, 22, 23, 24, 25); and
that the q movable strips are selectively connected to the p fixed strips is specifically:
the third movable strip (23) is connected to the first fixed strip (11) and the fifth fixed strip (15) in a first operating mode set by the switching switch; and
the second movable strip (22) is connected to the first fixed strip (11) and the second fixed strip (12), and the fifth movable strip (25) is connected to the third fixed strip (13) and the fifth fixed strip (15) in a second operating mode set by the switching switch; and
the first movable strip (21) is connected to the first fixed strip (11) and the second fixed strip (12), and the fourth movable strip (24) is connected to the third fixed strip (13), the fourth fixed strip (14), and the fifth fixed strip (15) in a third operating mode set by the switching switch.

5. The antenna according to claim 4, wherein the n output ends comprise a first output end to a sixth output end, and the m input ends comprise the first input end to the fourth input end, wherein
the first input end is connected to the first output end;
the second input end is connected to the second output end and the third output end;
the third input end is connected to the second output end and the third output end; and
the fourth input end is connected to the fourth output end, the fifth output end, and the sixth output end.

6. The antenna according to any one of claims 1 to 5, wherein the q movable strips are selectively connected to the p fixed strips in an electrical manner or capacitive coupling manner.

7. The antenna according to any one of claims 1 to 5, wherein both the p fixed strips and the q movable strips are metal strips or copper foil strips of a printed circuit board, PCB.

8. A network device, comprising the antenna according to any one of claims 1 to 7.

## Patentansprüche

1. Antenne, umfassend:
n Strahlerelemente (1011, 1012, 1013, ..., 101n), wobei die n Strahlerelemente sequentiell in einer horizontalen Richtung oder in einer vertikalen Richtung angeordnet sind;
einen "Powersplitter" oder einen Phasenverschieber (1022), umfassend n Ausgangsenden (N1, N2, N3, ..., und Nn) und m Eingangsenden (M1, M2, ..., und Mm), wobei die n Ausgangsenden (N1, N2, N3, ..., und Nn) jeweils mit den n Strahlerelementen (1011, 1012, 1013, ..., 101n) verbunden sind und jedwedes der m Eingangsenden (M1, M2, ..., und Mm) mit mindestens einem der n Ausgangsenden (N1, N2, N3, ..., und Nn) verbunden ist; und
einen Umschaltschalter (1021), der m erste Ports, K zweite Ports und ein Schaltelement umfasst, wobei die m ersten Ports jeweils mit den m Eingangsenden (M1, M2, ..., und Mm) verbunden sind;
die K zweiten Ports konfiguriert sind, um ein Eingangssignal zu koppeln; und
das Schaltelement konfiguriert ist, um eine Verbindungsbeziehung zwischen den m ersten Ports und den K zweiten Ports zu schalten, um so selektiv das Eingangssignal an mindestens einen ersten Port auszugeben,
wobei das Schaltelement p feste Streifen (P1, P2, ..., und Pp) und q bewegliche Streifen (Q1, Q2, ..., und Qq) umfasst;
wobei die Enden der m festen Streifen in den p festen Streifen als die m ersten Ports agieren,
wobei das Schaltelement des Weiteren mindestens einen Zugstab einschließt, der mit mindestens einem der q beweglichen Streifen verbunden ist;
wobei die Antenne konfiguriert ist, um den mindestens einen Zugstab elektrisch zu steuern, so dass die q beweglichen Streifen (Q1, Q2, ..., und Qq) elektrisch gesteuert und selektiv mit den p festen Streifen (P1, P2, ..., und Pp) verbunden werden,
wobei m ≤ p ist, und wobei die Enden der K festen Streifen in den p festen Streifen als die K zweiten Ports agieren, und K ≤ p,
wobei p, n und m ganze Zahlen größer als 1 sind, und q und K ganze Zahlen sind, die größer als oder gleich 1 sind.

2. Antenne gemäß Anspruch 1, wobei die p festen Streifen (P1, P2, ..., und Pn) einen ersten festen Streifen bis zu einem vierten festen Streifen (11, 12, 13, 14) umfassen, wobei der erste feste Streifen, der zweite feste Streifen und der vierte feste Streifen jeweils mit dem ersten Eingangsende, dem zweiten Eingangsende und dem dritten Eingangsende verbunden sind, und ein Ende des dritten festen Streifens als der zweite Port agiert; und die q beweglichen Streifen einen ersten beweglichen Streifen bis zu einem dritten beweglichen Streifen (21, 22, 23) umfassen; und
wobei, dass die q beweglichen Streifen selektiv mit den p festen Streifen verbunden sind, konkret bedeutet:
in einem ersten Betriebsmodus, welcher durch den Umschaltschalter festgelegt wird, ist der erste bewegliche Streifen (21) mit dem ersten festen Streifen (11) und dem dritten festen Streifen (13) verbunden; und
in einem zweiten Betriebsmodus, welcher durch den Umschaltschalter festgelegt wird, ist der zweite bewegliche Streifen (22) mit dem ersten festen Streifen (11) und dem zweiten festen Streifen (12) verbunden, und der dritte bewegliche Streifen (23) ist mit dem dritten festen Streifen (13) und dem vierten festen Streifen (14) verbunden.

3. Antenne gemäß Anspruch 2, wobei die n Ausgangsenden (N1, N2, ..., Nn) ein erstes Ausgangsende bis zu einem sechsten Ausgangsende umfassen, und die m Eingangsenden das erste Eingangsende bis zu dem dritten Eingangsende umfassen, wobei
das erste Eingangsende mit dem ersten Ausgangsende verbunden ist;
das zweite Eingangsende mit dem zweiten Ausgangsende, dem dritten Ausgangsende, dem vierten Ausgangsende, dem fünften Ausgangsende und dem sechsten Ausgangsende verbunden ist; und
das dritte Eingangsende mit dem zweiten Ausgangsende, dem dritten Ausgangsende, dem vierten Ausgangsende, dem fünften Ausgangsende und dem sechsten Ausgangsende verbunden ist.

4. Antenne gemäß Anspruch 1, wobei die p festen Streifen einen ersten festen Streifen bis zu einem fünften festen Streifen (11, 12, 13, 14, 15) umfassen, wobei der erste feste Streifen bis zu dem vierten festen Streifen jeweils mit dem ersten Eingangsende bis zu dem vierten Eingangsende verbunden sind, und ein Ende des fünften festen Streifens als der zweite Port agiert; und wobei die q beweglichen Streifen einen ersten beweglichen Streifen bis zu einem fünften beweglichen Streifen (21, 22, 23, 24, 25) umfassen; und
wobei, dass die q beweglichen Streifen selektiv mit den p festen Streifen verbunden sind, konkret bedeutet:
in einem ersten Betriebsmodus, welcher durch den Umschaltschalter festgelegt wird, ist der dritte bewegliche Streifen (23) mit dem ersten festen Streifen (11) und dem fünften festen Streifen (15) verbunden; und
in einem zweiten Betriebsmodus, welcher durch den Umschaltschalter festgelegt wird, ist der zweite bewegliche Streifen (22) mit dem ersten festen Streifen (11) und dem zweiten festen Streifen (12) verbunden, und der fünfte bewegliche Streifen (25) ist mit dem dritten festen Streifen (13) und dem fünften festen Streifen (15) verbunden; und
in einem dritten Betriebsmodus, welcher durch den Umschaltschalter festgelegt wird, ist der erste bewegliche Streifen (21) mit dem ersten festen Streifen (11) und dem zweiten festen Streifen (12) verbunden, und der vierte bewegliche Streifen (24) ist mit dem dritten festen Streifen (13), dem vierten festen Streifen (14) und dem fünften festen Streifen (15) verbunden.

5. Antenne gemäß Anspruch 4, wobei die n Ausgangsenden ein erstes Ausgangsende bis zu einem sechsten Ausgangsende umfassen, und die m Eingangsenden das erste Eingangsende bis zu dem vierten Eingangsende umfassen, wobei das erste Eingangsende mit dem ersten Ausgangsende verbunden ist;
das zweite Eingangsende mit dem zweiten Ausgangsende und dem dritten Ausgangsende verbunden ist;
das dritte Eingangsende mit dem zweiten Ausgangsende und dem dritten Ausgangsende verbunden ist; und
das vierte Eingangsende mit dem vierten Ausgangsende, dem fünften Ausgangsende und dem sechsten Ausgangsende verbunden ist.

6. Antenne gemäß einem der Ansprüche 1 bis 5, wobei die q beweglichen Streifen selektiv in elektrischer Weise oder kapazitiv gekoppelter Weise mit den p festen Streifen verbunden sind.

7. Antenne gemäß einem der Ansprüche 1 bis 5, wobei sowohl die p festen Streifen als auch die q beweglichen Streifen Metallstreifen oder Kupferfolienstreifen einer gedruckten Schaltplatine, PCB, sind.

8. Netzwerkvorrichtung, umfassend die Antenne gemäß einem der Ansprüche 1 bis 7.

## Revendications

1. Antenne, comprenant :
n éléments rayonnants (1011, 1012, 1013, ..., 101n), les n éléments rayonnants étant agencés séquentiellement dans une direction horizontale ou dans une direction verticale ;
un diviseur de puissance ou un déphaseur (1022), comprenant n extrémités de sortie (N1, N2, N3, ..., et Nn) et m extrémités d'entrée (M1, M2, ..., et Mm), les n extrémités de sortie (N1, N2, N3, ..., et Nn) étant respectivement connectées aux n éléments rayonnants (1011, 1012, 1013, ..., 101n), et l'une quelconque des m extrémités d'entrée (M1, M2, ..., et Mm) étant connectée à au moins l'une des n extrémités de sortie (N1, N2, N3, ..., et Nn) ; et
un commutateur de commutation (1021), comprenant m premiers ports, K seconds ports, et un élément de commutation, les m premiers ports étant respectivement connectés aux m extrémités d'entrée (M1, M2, ...., et Mm) ;
les K seconds ports étant configurés pour coupler un signal d'entrée ; et
l'élément de commutation étant configuré pour commuter une relation de connexion entre les m premiers ports et les K seconds ports, de manière à délivrer sélectivement le signal d'entrée à au moins un premier port,
l'élément de commutation comprenant p bandes fixes (P1, P2, ..., et Pp) et q bandes mobiles (Q1, Q2, ..., et Qq) ;
des extrémités de m bandes fixes dans les p bandes fixes faisant office de m premiers ports,
l'élément de commutation incluant en outre au moins une tige de traction connectée à au moins une des q bandes mobiles ;
l'antenne étant configurée pour commander électriquement l'au moins une tige de traction de sorte que les q bandes mobiles (Q1, Q2, ..., et Qq) soient commandées électriquement et sélectivement connectées aux p bandes fixes (P1, P2, ..., et Pp),
avec m ≤ p et des extrémités de K bandes fixes dans les p bandes fixes faisant office de K seconds ports, et K ≤ p,
p, n et m étant des entiers supérieurs à 1, et q et K étant des entiers supérieurs ou égaux à 1.

2. Antenne selon la revendication 1, les p bandes fixes (P1, P2, ..., et Pn) comprenant une première bande fixe à une quatrième bande fixe (11, 12, 13, 14), la première bande fixe, la deuxième bande fixe, et la quatrième bande fixe étant respectivement connectées à une première extrémité d'entrée, une deuxième extrémité d'entrée, et une troisième extrémité d'entrée, et une extrémité de la troisième bande fixe faisant office de second port ; et les q bandes mobiles comprenant une première bande mobile à une troisième bande mobile (21, 22, 23) ; et
le fait que les q bandes mobiles sont sélectivement connectées aux p bandes fixes consistant spécifiquement en ce que :
la première bande mobile (21) est connectée à la première bande fixe (11) et à la troisième bande fixe (13) dans un premier mode de fonctionnement défini par le commutateur de commutation ; et
la deuxième bande mobile (22) est connectée à la première bande fixe (11) et à la deuxième bande fixe (12), et la troisième bande mobile (23) est connectée à la troisième bande fixe (13) et à la quatrième bande fixe (14) dans un deuxième mode de fonctionnement défini par le commutateur de commutation.

3. Antenne selon la revendication 2, les n extrémités de sortie (N1, N2, ..., Nn) comprenant une première extrémité de sortie à une sixième extrémité de sortie, et les m extrémités d'entrée comprenant la première extrémité d'entrée à la troisième extrémité d'entrée,
la première extrémité d'entrée étant connectée à la première extrémité de sortie ;
la deuxième extrémité d'entrée étant connectée à la deuxième extrémité de sortie, la troisième extrémité de sortie, la quatrième extrémité de sortie, la cinquième extrémité de sortie, et la sixième extrémité de sortie ; et
la troisième extrémité d'entrée étant connectée à la deuxième extrémité de sortie, la troisième extrémité de sortie, la quatrième extrémité de sortie, la cinquième extrémité de sortie, et la sixième extrémité de sortie.

4. Antenne selon la revendication 1, les p bandes fixes comprenant une première bande fixe à une cinquième bande fixe (11, 12, 13, 14, 15), la première bande fixe à la quatrième bande fixe étant respectivement connectées à une première extrémité d'entrée à une quatrième extrémité d'entrée, et une extrémité de la cinquième bande fixe faisant office de second port ; et les q bandes mobiles comprenant une première bande mobile à une cinquième bande mobile (21, 22, 23, 24, 25) ; et
le fait que les q bandes mobiles sont sélectivement connectées aux p bandes fixes consistant spécifiquement en ce que :
la troisième bande mobile (23) est connectée à la première bande fixe (11) et à la cinquième bande fixe (15) dans un premier mode de fonctionnement défini par le commutateur de commutation ; et
la deuxième bande mobile (22) est connectée à la première bande fixe (11) et à la deuxième bande fixe (12), et la cinquième bande mobile (25) est connectée à la troisième bande fixe (13) et à la cinquième bande fixe (15) dans un deuxième mode de fonctionnement défini par le commutateur de commutation ; et
la première bande mobile (21) est connectée à la première bande fixe (11) et à la deuxième bande fixe (12), et la quatrième bande mobile (24) est connectée à la troisième bande fixe (13), la quatrième bande fixe (14), et la cinquième bande fixe (15) dans un troisième mode de fonctionnement défini par le commutateur de commutation.

5. Antenne selon la revendication 4, les n extrémités de sortie comprenant une première extrémité de sortie à une sixième extrémité de sortie, et les m extrémités d'entrée comprenant la première extrémité d'entrée à la quatrième extrémité d'entrée,
la première extrémité d'entrée étant connectée à la première extrémité de sortie ;
la deuxième extrémité d'entrée étant connectée à la deuxième extrémité de sortie et à la troisième extrémité de sortie ;
la troisième extrémité d'entrée étant connectée à la deuxième extrémité de sortie et à la troisième extrémité de sortie ; et
la quatrième extrémité d'entrée étant connectée à la quatrième extrémité de sortie, la cinquième extrémité de sortie, et la sixième extrémité de sortie.

6. Antenne selon l'une quelconque des revendications 1 à 5, les q bandes mobiles étant sélectivement connectées aux p bandes fixes d'une manière électrique ou d'une manière par couplage capacitif.

7. Antenne selon l'une quelconque des revendications 1 à 5, à la fois les p bandes fixes et les q bandes mobiles étant des bandes métalliques ou des bandes de feuille de cuivre d'une carte de circuit imprimé, PCB.

8. Dispositif de réseau, comprenant l'antenne selon l'une quelconque des revendications 1 à 7.
